# EUROPEAN PATENT SPECIFICATION

(11) **EP 4 199 234 B1**
(45) Date of publication and mention of the grant of the patent: **23.07.2025**
(21) Application number: 21855997.9
(22) Date of filing: 12.08.2021
(51) Int. Cl.: H01M 4/14, H01M 10/06, H01M 10/08, H01M 10/12, H01M 50/409, H01M 50/414, H01M 50/417, H01M 50/42, H01M 50/431, H01M 50/434, H01M 50/44, H01M 50/443, H01M 50/446, H01M 50/449, H01M 50/451, H01M 50/463, H01M 50/466, H01M 50/489, H01M 50/491

(54) **SEPARATOR FOR A LEAD-ACID BATTERY AND LEAD-ACID BATTERY**
SEPARATOR FÜR EINE BLEI-SÄURE-BATTERIE UND BLEI-SÄURE-BATTERIE
SÉPARATEUR POUR UNE BATTERIE ACIDE AU PLOMB-ACIDE ET BATTERIE ACIDE AU PLOMB

(30) Priority: 14.08.2020 JP 2020136971
(43) Date of publication of application: 21.06.2023
(73) Proprietor: Asahi Kasei Kabushiki Kaisha, Tokyo 1000006 (JP)
(72) Inventor: FUNAKI, Masuro, Tokyo 100-0006 (JP); UOZUMI, Makoto, Tokyo 100-0006 (JP); IIZUKA, Yasuhito, Tokyo 100-0006 (JP)
(74) Representative: Strehl & Partner mbB
(86) International application number: PCT/JP2021/029768
(87) International publication number: WO 2022/034918

(56) References cited:
- WO-A1-2015/171595
- WO-A1-2015/171595
- JP-A- 2002 134 086
- JP-A- 2009 132 887
- JP-A- 2019 040 791
- JP-A- H0 543 823
- JP-A- H05 299 071
- JP-A- H11 329 391
- US-A1- 2013 273 409
- US-A1- 2013 273 409
- MIYAKE NAOTO ET AL: "Novel Lead Acid Battery Separators to Meet New Market Needs", vol. 10, no. 3, 22 May 2019 (2019-05-22), pages 257 - 265, XP093180437, ISSN: 2185-0984, Retrieved from the Internet <URL:https://www.jstage.jst.go.jp/article/jsaeijae/10/3/10_20194112/_pdf/-char/en> DOI: 10.20485/jsaeijae.10.3_257
- TONIAZZO ET AL: "Amersorb: a new high-performance polymeric separator for lead-acid batteries", JOURNAL OF POWER SOURCES, ELSEVIER, AMSTERDAM, NL, vol. 144, no. 2, 15 June 2005 (2005-06-15), pages 365 - 372, XP027756254, ISSN: 0378-7753, [retrieved on 20050615]

## Description

### FIELD

The present disclosure relates to a separator for a lead-acid battery, and a lead-acid battery using the same.

### BACKGROUND

Lead-acid batteries are widely used worldwide in automotive applications, such as passenger vehicles, buses, trucks, motorcycles, and golf carts, and industrial applications, such as forklifts, agricultural machinery, railroads, UPS, and communication equipment. In particular, in recent years, in-vehicle applications require performance which can support operation at approximately 50% to 80% partial state-of-charge (PSoC), such as hybrid electric vehicles (HEV) and idle start-and-stop (ISS) vehicles.

The main performance requirements for lead-acid batteries are charge acceptance, cycle characteristics, and water loss characteristics (water loss performance). Lead-acid batteries equipped with charge control functions and regenerative charging functions to improve environmental performance and fuel efficiency have short and limited charging opportunities. Thus, charge acceptance is required in order to efficiently charge the battery with a large amount of energy. If the battery is maintained with PSoC for a long time, the cycle characteristics tend to deteriorate. The reason is that in PSoC batteries, highly crystalline sulfate can easily form on the electrode surface, and when the formed sulfate crystals accumulate, the charge acceptance performance of the electrode is dramatically reduced (sulfation), and eventually the battery reaches the end of its life. When the negative electrode reaches the hydrogen generation potential, water is decomposed and water loss occurs. Thus, from the viewpoint of maintainability, improvement and maintenance of water loss characteristics are required.

The separator for a lead-acid battery is generally a membrane having a microporous structure which has withstand voltage characteristics, and is placed in close contact with the surfaces of both electrodes in order to prevent short-circuiting of the positive electrode and the negative electrode. Improving the structure of the separator to control the electrode surface reactions which occur on the contact interface between the separator and the electrode is expected to improve the performance of the battery.

WO 2015/171595 discloses a technology for improving the charge acceptance and cycle life of lead-acid batteries by using a battery separator to which an engineered carbon material is applied or added.

The article "Novel Lead Acid Battery Separators to Meet New Market Needs" (MIYAKE NAOTO ET AL, INTERNATIONAL JOURNAL OF AUTOMOTIVE ENGINEERING, vol. 10, no. 3, 22 May 2019 (2019-05-22), pages 257-265, XP093180437, ISSN: 2185-0984, DOI: 10.20485/jsaeijae.10.3_257) discloses a composite lead-acid battery separator comprising a PE separator coated with a porous carbon layer.

The article "Amersorb: a new high-performance polymeric separator for lead-acid batteries" (TONIAZZO ET AL, JOURNAL OF POWER SOURCES, ELSEVIER, AMSTERDAM, NL, vol. 144, no. 2, 15 June 2005 (2005-06-15), pages 365-372, XP027756254, ISSN: 0378-7753) discloses a lead-acid battery separator material called 'Amersorb' which, in use, is coated by a micro-cracked gelled electrolyte layer.

### SUMMARY

### [TECHNICAL PROBLEM]

However, while the battery separator described in Patent Literature 1 is evaluated for battery cycle characteristics and charge acceptance performance after a certain cycle, improvement in water loss characteristics and means therefor have not been evaluated.

The present disclosure has been conceived in light of the circumstances described above, and an object thereof is to provide a separator for a lead-acid battery which is excellent in water loss characteristics, and a lead-acid battery using the same.

### [SOLUTION TO PROBLEM]

The invention is defined in the appended claims.

### [ADVANTAGEOUS EFFECTS OF INVENTION]

According to the present disclosure, a separator for a lead-acid battery and a lead-acid battery which have suitable water loss characteristics can be provided.

### BRIEF DESCRIPTION OF DRAWINGS

FIG. 1 is a graph showing the relationship between the large crack ratio of the separators for a lead-acid battery of the Examples and Comparative Examples and water loss current value.
FIG. 2 is an example of a digital microscope image of a cross-section of a separator for a lead-acid battery comprising a crack-containing layer.
FIG. 3 is a digital microscope image of the surface of the separator for a lead-acid battery of FIG. 2.
FIG. 4 is a 500-fold digital microscope observation image of the surface of the crack-containing layer of FIG. 3.
FIG. 5 is a 500-fold SEM observation image of the surface of the crack-containing layer of FIG. 3.

### DESCRIPTION OF EMBODIMENTS

The embodiments of the present disclosure will be described in detail below. Note that the present disclosure is not limited to the following embodiments, and various changes can be made within the scope of the claims.

### <<Separator for a Lead-acid battery>>

The separator for a lead-acid battery (hereinafter also referred to simply as "separator") of the present disclosure comprises a substrate, and a crack-including layer (hereinafter also referred to simply as "cracked layer"), which is laminated on at least one surface of the substrate. The separator of the present disclosure is arranged between the positive and negative electrodes to prevent electrical shorting between the positive and negative electrodes. The cracked layer may be laminated on both sides of the substrate and may be laminated entirely or partially on one or both sides of the substrate. In the present disclosure, the term "laminated", regarding the cracked layer on one or both sides of the substrate, refers to lamination directly or indirectly via another layer on the substrate. The separator is generally microporous so that ions can permeate therethrough. The maximum pore diameter of the separator is preferably 500 nm or less, more preferably 400 nm or less, further preferably 300 nm or less, even further preferably 200 nm or less, and even further preferably 150 nm or less.

### <Cracked Layer>

In the present disclosure, "cracks" are spatial separations which break the continuity of the smooth surface of the layer in a separator comprising a layer on the substrate, and refer to groove-like structures formed in the thickness direction (z-axis direction) from the layer surface (x-axis and y-axis plane). In the present specification, the crack-containing layer is also referred to as the "cracked layer." The pattern of cracks is not particularly limited, but as a specific example, the surface of the layer may have a pattern (design) such as stripes, a lattice, or branching (alligatoring).

### <Large Cracks>

In the present disclosure, the cracked layer has cracks which can be observed with an optical microscope when the layer surface is observed at a 500-fold magnification (herein also referred to as "large cracks"). "Large cracks" are more preferably cracks which form electrical insulation in the crack-containing layer. Large cracks have a structure which is continuous from the surface of the cracked layer to the boundary between the cracked layer and the substrate, and by spatially separating the adjacent layers across the cracks, an electrically insulated structure is created. It is not necessary that all of the large cracks reach the substrate boundary, but from the viewpoint of improving water loss characteristics, 50% or more, preferably 70% or more, further preferably 90% or more, and even further preferably 100% of all cracks reach the boundary. The distance of spatial separation, i.e., the width of the large cracks, is 0.3 µm to 100 µm, preferably 0.3 µm to 50 µm, more preferably 0.3 µm to 35 µm, and further preferably 0.3 µm to 20 µm. The lower limit of the length of large cracks is 200 µm or more, preferably 500 µm or more, and further preferably 1 mm or more. The upper limit of the length of large cracks is 10 mm or less, and preferably 5 mm or less, from the viewpoint of reducing peeling or falling off of the cracked layer.

### <Microcracks>

In the present disclosure, the cracked layer also has microcracks in addition to large cracks. In the present specification, the term "microcracks" refers to small cracks which can be observed with a scanning electron microscope but not with an optical microscope when the cracked layer surface is observed at a 500-fold magnification. Microcracks have a structure that maintains electrical conductivity between adjacent layers with the cracks interposed therebetween. From the viewpoint of maintaining electrical conductivity, the upper limit of the width of microcracks is less than 0.3 µm, preferably 0.1 µm or less, and further preferably 0.05 µm or less The lower limit of the width of microcracks is 0.01 µm or more. The length of the microcracks is 200 µm or less from the viewpoint of maintaining electrical conductivity, and 1 µm or more, or preferably 10 µm or more from the viewpoint of electrolyte retention. It is preferable that a relatively large amount of short microcracks be present rather than a relatively small amount of long microcracks, from the viewpoint of allowing the cracked layer to uniformly retain the electrolyte.

The cracked layer of the present disclosure can suppress deterioration of water loss characteristics. Though not to be limited by theory, the reason therefor is presumed as follows. Specifically, conventionally, in a separator surface (x-axis y-axis plane) direction, a structure (also simply referred to as a "layer") is provided on the surface of the substrate of a separator for a lead-acid batter so as to function as auxiliary electrically conductive paths of an electrode, whereby the electrode surface reaction is promoted and charge acceptance and cycle characteristics are improved. Examples of the material for this structure include inorganic substances, organic substances, and mixtures of organic and inorganic substances. However, the structure accelerates the electrode surface reaction, but at the same time promotes the decomposition of water, resulting in deterioration of water loss characteristics. Thus, in the present disclosure, it is considered that deterioration of water loss characteristics can be suppressed by intentionally forming large cracks in the layer and partially limiting the formation of electrically conductive paths. Furthermore, when microcracks are present, the amount of electrolyte retained in the structure increases, promoting the diffusion of sulfate ions generated during the charging reaction. As a result, the balance between the charging reaction and the water-splitting reaction progresses in favor of the charging reaction, and the water-splitting reaction is suppressed, thereby suppressing deterioration of water loss characteristics.

From the viewpoint of breaking the continuity of the smooth surface of the layer, the cracked layer has a large crack ratio, as measured by the method described later, of 1% or more, preferably 2% or more, further preferably 3% or more, and yet further preferably 4% or more. The large crack ratio can be adjusted, for example, by changing the materials of the substrate, cracked layer, resin, and surfactant, the thickness of the cracked layer, and the formation conditions of the cracked layer.

In the cracked layer, from the viewpoint of increasing the amount of electrolyte retained in the layer, per 100 µm × 100 µm coated surface, there is preferably formed 1 or more, more preferably 3 or more, further preferably 5 or more, and even further preferably 10 or more microcracks preferably having a width of 0.3 µm or less and a thickness of 10 µm or more.

From the viewpoint of suppressing the peeling and falling off of the cracked layer from the separator, and forming the cracked layer uniformly on the substrate surface, the thickness of the cracked layer according to the present disclosure is preferably 0.1 µm to 30 µm, more preferably 0.1 µm to 25 µm, further preferably 0.1 µm to 20 µm, and even further preferably 0.1 µm to 15 µm.

### <Primary Materials of Cracked Layer>

The primary materials forming the cracked layer include inorganic substances, organic substances, and mixtures of organic and inorganic substances. The primary materials forming the cracked layer account for 50 wt% or more, preferably 70 wt% or more, preferably 80 wt% or more, or preferably 90 wt% or more of the total weight of the cracked layer. Examples of inorganic materials include ceramic materials such as alumina (Al₂O₃), zirconia (ZrO₂), silicon nitride (Si₃N₄), and silicon carbide (SiC), as well as carbon materials. The cracked layer of the present disclosure includes an electrically conductive material from the viewpoint of electrical conductivity. Examples of the electrically conductive material include materials having electrical conductivity of 0.1 S/m or more, such as metal materials, carbon materials, and electrically conductive polymer materials, and carbon materials are preferred. Examples of carbon materials include carbon clusters such as graphite, activated carbon, carbon black, graphene, and fullerenes, carbon monolithic materials, and mixtures thereof. Examples of electrically conductive materials other than carbon materials include fine metal powders, fine semiconductor powders, and electrically conductive organic compounds such as ion-doped polyaniline and halogen-doped polyacetylene.

From the viewpoint of facilitating crack formation and adjustment of the large crack ratio, the median particle size (d50) of the primary materials forming the cracked layer is preferably 0.01 µm to 500 µm, more preferably 0.01 µm to 100 µm, and further preferably between 0.01 µm to 10 µm.

### <Surfactant>

The cracked layer according to the present disclosure may contain a surfactant from the viewpoint of evenly distributing the primary materials of the cracked layer. When the material of the cracked layer is a carbon material, the surfactant can evenly distribute the carbon material throughout the cracked layer to form uniform electrically conductive paths, which is more preferable. As the surfactant, various surfactants can be used, including anionic surfactants such as sulfate, phosphate, carboxylic, and sulfonate surfactants; cationic surfactants such as quaternary ammonium salt and amidoamine surfactants, amphoteric surfactants such as alkylbetaine, amidobetaine, and amine oxide surfactants; nonionic surfactants such as ether, fatty acid ester, and alkyl glucoxide surfactants; and polymeric surfactants such as polyacrylic acid, polyacrylate, polysulfonate, polynaphthalenesulfonate, polyalkylenepolyamine alkylene oxide, polyalkylenepolyimine alkylene oxide, polyvinyl picolidone, and cellulose surfactants. These may be used alone or in combination of two or more for the purpose of preventing agglomeration of fillers. The surfactant is not limited to these as long as the effect of uniformly dispersing the primary materials of the cracked layer can be obtained. The surfactant preferably contains at least one selected from the group consisting of ionic surfactants, i.e., anionic surfactants, cationic surfactants, and amphoteric surfactants.

The content of the surfactant is preferably 1 to 100 parts by weight or preferably 10 to 60 parts by weight with respect to 100 parts by weight of the total of the primary components of the cracked layer.

### <Resin>

The cracked layer according to the present disclosure preferably contains a resin from the viewpoint of enhancing the binding properties of the primary materials and suppressing peeling and falling off of the cracked layer from the substrate. Examples of the resin include styrene resins, acrylic/urethane resins, acrylic/styrene resins, vinyl acetate/acrylic resins, styrene/butadiene resins, acrylonitrile/butadiene resins, natural rubber resins, polybutadiene resins (BR resins), methyl methacrylate/butadiene resins, 2-vinylpyridine/styrene/butadiene resins (VP resins), chloroprene resins (CR resins), polyolefin-based resins such as polyethylene, polypropylene, polybutene, and copolymers thereof, modified polyolefin-based resins obtained by chlorinating or acid-modifying the polyolefin-based resins, fluorine-containing resins such as polyvinylidene fluoride or polytetrafluoroethylene, fluorine-containing rubber binders such as vinylidene fluoride-hexafluoropropylene-tetrafluoroethylene copolymers or ethylene-tetrafluoroethylene copolymers, (meth)acrylic acid-styrene-butadiene copolymer resins and hydrides thereof, polyvinyl alcohol resins, and polyvinyl alcohol/polyacetate copolymer resins.

Among the above resins, acrylic resins or styrene resins are more preferable, and acrylic resins are further preferable, from the viewpoint of improving binding properties and heat resistance. As used herein, the term "acrylic resin" includes acrylic copolymer resins, for example, polymers such as acrylic/urethane resins, acrylic/styrene resins, acrylic/styrene/butadiene resins, and vinyl acetate/acrylic resins, and acrylic resins. Furthermore, as used herein, the term "styrene resins" includes styrene copolymer resins, for example, polymers such as acrylic/styrene resins, styrene/butadiene resins, acrylic/styrene/butadiene resins, and 2-vinylpyridine/styrene/butadiene resins, and styrene resins.

The amount of the resin is preferably 1 to 100 parts by weight or preferably 10 to 40 parts by weight with respect to 100 parts by weight of the total of the primary components of the cracked layer.

These resins may contain one or more other components in addition to the compositions exemplified above. Furthermore, the resin is not limited to a single type, and multiple types can be used in combination as long as improvement in water loss characteristics can be obtained. For example, a combination of acrylic resin and styrene resin can be exemplified.

### <Thickener>

The cracked layer according to the present disclosure preferably contains a thickener from the viewpoint of suppressing peeling and falling off of the cracked layer from the substrate and uniformly forming the cracked layer on the substrate surface. Examples of thickeners include synthetic polymers such as polyethylene glycol, polypropylene glycol, urethane-modified polyether, polyacrylic acid, polyvinyl alcohol, and vinyl methyl ether-maleic anhydride copolymers, cellulose derivatives such as carboxymethyl cellulose (CMC), carbomethoxy cellulose, hydroxyethyl cellulose, and hydroxyethyl cellulose, natural polysaccharides such as xanthan gum, diutan gum, welan gum, gellan gum, guar gum, carrageenan gum, and pectin, and starches such as dextrin and pregelatinized starch. The thickener can appropriately be selected from the viewpoint of slurry viscosity, pot life, and particle size distribution. One type of thickener can be used alone, or two or more types can be used in combination.

The amount of the thickener is preferably 0.1 to 50 parts by weight and more preferably 1 to 20 parts by weight with respect to 100 parts by weight of the total of the primary components of the cracked layer.

### <Substrate>

The substrate is not particularly limited as long as it is microporous so that ions can permeate therethrough, and the substrate is preferably a microporous membrane produced from a natural or synthetic material selected from thermoplastic polymers such as polyvinyl and polyolefin, thermosetting polymers such as phenolic resins, natural or synthetic rubbers, and rubber materials such as latex, fibrous materials such as synthetic wood pulp (SWP), glass fibers, synthetic fibers, and cellulose fibers, and combinations thereof, and is more preferably a microporous membrane produced from a thermoplastic polymer. Examples of thermoplastic polymers include basically any acid resistant thermoplastic material suitable for lead-acid battery applications, and preferable examples of thermoplastic polymers include polyvinyl and polyolefin. Examples of polyvinyl include polyvinyl chloride (PVC). Examples of polyolefin include polyethylene and polypropylene. Polyethylene includes, for example, ultra-high molecular weight polyethylene (UHMWPE).

### <<Lead-acid battery>>

The lead-acid battery of the present disclosure comprises the separator for a lead-acid battery of the present disclosure. The lead-acid battery is a lead-acid battery comprising a positive electrode, a negative electrode, and the separator according to the present disclosure arranged between the positive electrode and the negative electrode. As the electrolyte, an electrolyte containing dilute sulfuric acid can be used. The positive electrode lattice constituting the positive electrode may be lead or a lead alloy, and the positive electrode active material may be a lead oxide, such as lead dioxide. The negative electrode lattice constituting the negative electrode may be lead or a lead alloy, the negative electrode active material may be lead, and the lead negative electrode itself may be, for example, in sponge-like form. Furthermore, the active materials of the positive electrode and the negative electrode may contain 50 wt% or less of metal elements other than lead or lead alloys. Dilute sulfuric acid is sulfuric acid having a specific gravity of 1.1 to 1.4, and the electrolyte may contain additives. From the viewpoint of suppressing sulfation, additives may contain, for example, aluminum ions. Other additives include metal ions such as lithium ions and sodium ions.

By providing the separator according to the present disclosure between the positive electrode and the negative electrode, the water decomposition reaction in the negative electrode during charging of the lead-acid battery is reduced, whereby a lead-acid battery having excellent water loss characteristics can be obtained. The separator for a lead-acid battery according to the present disclosure can be used in both open lead-acid batteries and valve regulated lead-acid batteries. From the viewpoint of further reducing the water decomposition reaction in the negative electrode and obtaining a lead-acid battery having excellent water loss characteristics, the separator according to the present disclosure is preferably arranged so that the crack-containing layer faces the negative electrode and is in contact with the negative electrode.

### <<Method for Production of Separator for Lead-acid battery>>

### <Substrate Preparation>

The method for the production of a substrate composed of a polyolefin, for example, ultra-high molecular weight polyethylene, will be described below, but the substrate is not limited to substrates obtained by the following production method as long as the cracked layer of the present disclosure can be formed thereon.

The method for the production of the substrate includes the steps of preparing a plastic polymer, such as ultra-high molecular weight polyethylene (hereinafter referred to as "UHMWPE"); preparing a particulate filler; preparing a processing plasticizer which is liquid at room temperature (25 °C); mixing the UHMWPE, particulate filler, and processing plasticizer to form a mixture; extruding the mixture through a die such as a slot die or inflation die to form a sheet; and an extraction step of partially or completely removing the plasticizer from the sheet, thereby forming a microporous matrix. After forming the sheet and before the extraction step, the sheet may be further processed by casting onto chilled rollers, calendering, or blowing. The cast or calendered sheet can then be subjected to the extraction step described above to partially or completely remove the plasticizer, thereby forming a microporous matrix.

The microporous matrix obtained by the above method comprises UHMWPE, a plasticizer (when partially extracted), and a particulate filler dispersed throughout the matrix. The particulate filler preferably accounts for 5 weight percent to 95 weight percent of the microporous matrix. As used herein, the term "microporous matrix" refers to a structure having a network of interconnected pores, the entire microporous matrix being interconnected by the constituent materials described above. Preferably, those pores occupy between 25 percent and 90 percent of the volume of the microporous matrix. The substrate production method may further comprise, after the extraction step, stretching the microporous matrix; and calendering the stretched microporous matrix to produce the final microporous material. By performing the above calendering process, a substrate having excellent dimensional stability can be formed even at high temperatures.

The substrate preferably has ribs. The ribs are observed as projections when the substrate is viewed from above by surface SEM (scanning electron microscope) observation of the substrate and an effective range of 4 mm × 3 mm under the condition of a 40-fold magnification. The ratio A / (A + B) calculated by measuring the area A of the rib projections and the area B of the base of the substrate is preferably 0.01 to 1.0, more preferably 0.01 to 0.50, and further preferably 0.05 to 0.10. The ribs are preferably at least one selected from the group consisting of serrated ribs, slanted ribs, broken ribs, straight ribs, embossments, protrusions, and combinations thereof.

### <Positive Electrode Side Ribs>

The substrate of the present disclosure, when arranged in a lead-acid battery, may have ribs on the positive electrode side. The substrate may comprise a back web of microporous membrane matrix and a series of positive electrode side ribs extending from the back web and preferably arranged along the longitudinal direction or MD of the separator. The positive electrode side ribs may be serrated. In another embodiment, the ribs on the positive electrode side are grooves, textured areas, battlement ribs, broken ribs, slanted ribs, straight ribs, curved or sinusoidal ribs, zig-zag ribs, embossments, dimples, or any combination thereof. Note that the positive electrode side ribs may extend from a predetermined region of the back web and/or may extend to other regions of the back ribs.

### <Negative Electrode Side Ribs>

The substrate of the present disclosure may be, but is not necessarily, arranged in a cell in a state in which ribs face the positive electrode. The ribs may be referred to as positive electrode side ribs when facing the positive electrode. The ribs extending from the opposite side of the microporous matrix as a separator face the negative electrode and may be arranged in the MD or TD. When the negative electrode side ribs are arranged along the TD, they are generally referred to as "cross ribs", and are referred to as "negative electrode side cross ribs" or "negative cross ribs; NCR" in the following descriptions. The separator is typically, but not necessarily, arranged in a cell such that the negative electrode side cross ribs are positioned toward the negative electrode. In light of the positive electrode side ribs, the negative electrode side ribs can be the same ribs, smaller ribs, longitudinal mini-ribs, crossed mini-ribs, NCR, slanted ribs, or combinations thereof. Furthermore, the negative electrode side and/or the positive electrode side surface of the separator may be entirely or partially rib-free and one or both sides of the separator may be smooth or flat.

### <Cracked layer Formation>

The cracked layer may be directly laminated on the substrate surface or indirectly laminated thereon as an intermediate laminate layer or a laminate surface layer of a substrate comprising a laminate consisting of a single layer or multiple layers. In the latter case, the cracked layer may be introduced in an intermediate step in the process of laminating a single layer or multiple layers on the substrate, or after introducing the cracked layer into a portion of the laminate material, the substrate and the laminate containing the cracked layer may be overlapped and introduced.

The method for forming the cracked layer laminated on the substrate includes: mixing the material for forming the cracked layer with a solvent; introducing the mixture of materials to the surface of the substrate or laminate; and drying the mixture to remove the solvent. The materials are preferably homogenized in a solvent to form a mixture. The solvent may be an aqueous solvent or an organic solvent. The method for introduction includes applying the mixture in a wet state to the surface of a substrate or laminate using, for example, a die coating method or a gravure coating method. The substrate or laminate coated with the mixture may be subjected to further processing such as pressing. If the laminate has a cracked layer as an intermediate layer, further layers may be formed on the cracked layer.

The formation of large cracks and microcracks may be performed during the drying process described above or by physically breaking the surface of the cracked layer in another or an additional process. For example, from the viewpoint of easily forming large cracks and microcracks at the same time and reducing the number of steps, it is preferable to form the large cracks and microcracks in the drying step. More preferably, the wet mixture introduced onto the surface of the substrate or laminate is dried in an atmosphere of 85 °C at a certain or higher level of drying speed for a certain or higher level of drying time. The drying method includes, for example, hot air drying. The large cracks and microcracks can be selectively formed by controlling the drying speed and drying time. By evaporating the solvent at a certain drying speed or higher, the mixture leaves a layer of solids having large cracks. If the drying speed is increased and the drying is completed rapidly, large cracks can be formed with little or no microcracks. Conversely, microcracks can be formed with little or no large cracks by drying at a certain or lower level of drying speed for a certain or higher level of drying time. Specifically, by drying the mixture in a certain range of drying speed and a certain range of drying time, excessive formation of large cracks can be suppressed, and large cracks and microcracks can be formed simultaneously in the cracked layer. Furthermore, by using primary materials having the aforementioned median particle size (d50) as the material forming the cracked layer, crack formation and the large crack ratio may be adjusted.

### <<Lead-acid battery Production Method>>

A lead-acid battery comprising the separator according to the present disclosure comprises a positive electrode, a negative electrode, and the separator of the present disclosure between the positive electrode and the negative electrode. The form of the separator for a lead-acid battery can be determined so as to match each component of the lead-acid battery. The lead-acid battery of the present disclosure is preferably a lead-acid battery comprising a battery case, a positive electrode, a negative electrode, dilute sulfuric acid as an electrolyte, and the separator according to the present disclosure arranged between the positive electrode and the negative electrode. The positive electrode lattice constituting the positive electrode may be lead or a lead alloy, and the positive electrode active material may be a lead oxide, such as lead dioxide. The negative electrode lattice constituting the negative electrode may be lead or a lead alloy, the negative electrode active material may be lead, and the lead negative electrode itself may be, for example, in sponge-like form. Furthermore, the active materials of the positive electrode and the negative electrode may contain other metal elements in an amount of 30 wt% or less in the above composition. The dilute sulfuric acid is sulfuric acid having a specific gravity of 1.1 to 1.4, and may further contain additives. In the present disclosure, by using a separator having a cracked layer in the lead-acid battery, the formation of electrically conductive paths on the separator surface is partially suppressed, whereby the water decomposition reaction can be reduced and the deterioration of water loss characteristics can be suppressed. Thus, it is preferable to arrange the separator according to the present disclosure between the positive electrode and the negative electrode of the lead-acid battery. The separator for a lead-acid battery according to the present disclosure can be used in both open lead-acid batteries and valve regulated lead-acid batteries.

### EXAMPLES

The Examples of the present disclosure will be described below, but these examples are for explanatory purposes, and the scope of the present disclosure is not limited to the following Examples. Various evaluation results of the separators and lead-acid batteries obtained in the Examples and Comparative Examples are shown in Table 1. The evaluation methods for each evaluation item are described below.

### <<Large Crack Ratio>>

A KEYENCE Digital Microscope VHX-6000 is used to observe and measure the large crack ratio. When observing large cracks of a separator taken from a completed lead-acid battery, the following operations are performed before observation with an optical microscope. (1) The removed separator is washed with distilled water. (2) The pH of the washing water is measured, and washing is stopped when the pH becomes neutral to weakly acidic. However, in (1) and (2), no physical scrubbing or the like is performed. (3) The separator is air dried. However, no rapid drying such as hot air drying is performed.

A ZS200 is used as the lens of the microscope. The shooting mode of the microscope is set to standard mode (2 million pixels [1600 × 1200]), and for the 500-fold observation image of the cracked layer surface, the ratio of the area of large cracks to the area of the observation area is measured as the large crack ratio using the automatic area measurement function. In the measurement, measurement mode: particle count, extraction mode: color extraction, specification of extraction area: numerical specification (rectangle, 400 µm × 400 µm) are selected and input, and the color tolerance is adjusted to set the color contrast on the smooth surface of the cracked layer surface and large cracks. The area of color contrast provided in large cracks is automatically measured to obtain the area of large cracks and the large crack ratio. The measurement results of the large crack ratio are shown in Table 1. The unit is percentage. The imaging conditions are summarized below.

### [Imaging Conditions]

Imaging magnification: 500×
Imaging conditions: 2 million pixels [1600 × 1200]
Epi-illumination: Coaxial epi-illumination
Shooting range: 400 µm × 400 µm

Under the above imaging conditions, contrast occurs between the surface of the cracked layer and the groove-like structure, making it possible to distinguish them. Typically, grooved structures are observed in thin stripes on the surface of the cracked layer.

### <<Percentage of Cracks Continuous to Boundary with Substrate>>

A scanning electron microscope (tabletop microscope Miniscope TM3000 manufactured by Hitachi, TM3000 dedicated energy dispersive X-ray spectrometer SwiftED3000, multi-coater VES-10; hereinafter referred to as "SEM" and "coater") is used to observe cracks that continue to the boundary with the substrate. When observing the microcracks of the separator extracted from the completed lead-acid battery, the following operations are performed before observation by SEM. (1) The removed separator is washed with distilled water. (2) The pH of the washing water is measured, and washing is stopped when the pH becomes neutral to weakly acidic. However, in (1) and (2), no physical scrubbing or the like is performed. (3) The separator is air dried. However, no rapid drying such as hot air drying is performed. (4) The separator sample to be observed is subjected to platinum-palladium vapor deposition using the coater. Under the above imaging conditions, by observing the surface of the cracked layer with a 2000-fold magnification, it can be confirmed whether or not the cracks continue to the boundary with the substrate.

The percentage K of cracks is calculated as K = M / L × 100 (%) from the number of cracks (crack generation number, L) generated from the surface of the cracked layer and the number of cracks (continuing cracks number, M) continuing to the boundary with the substrate. The number of observation images used for calculation is three per data set. The selection of the three images is random.

### <<Microcracks Observation>>

The SEM and coater are used to observe the microcracks. When observing the microcracks of the separator extracted from the completed lead-acid battery, the following operations are performed before SEM observation. (1) The removed separator is washed with distilled water. (2) The pH of the washing water is measured, and washing is stopped when the pH becomes neutral to weakly acidic. However, in (1) and (2), no physical scrubbing or the like is performed. (3) The separator is air dried. However, no rapid drying such as hot air drying is performed. (4) The separator sample to be observed is subjected to platinum-palladium vapor deposition using the coater. Under the above imaging conditions, microcracks can be confirmed by observing the surface of the cracked layer with a 500-fold magnification. Typically, thin streak-like groove structures having a width of less than 0.3 µm can be observed in the surface of the cracked layer. Large cracks are typically observed as wide streak-like groove structures having a width of 0.3 µm or more.

### <<Crack Width Measurement>>

An image measured using SEM is used to measure the width of cracks. The surface of the cracked layer is observed at a 500 to 2000-fold magnification, and the obtained image is imported into Microsoft Excel (PowerPoint is also acceptable). The scale length and the number of pixels in the image are confirmed, and the unit pixel length (µm/pixel) is calculated by dividing the number of pixels from the scale length. The crack width is determined by calculating the product of the obtained unit pixel length and the number of pixels in the width direction of the crack to be measured. For the measurement of large crack widths, SEM observation is performed on a randomly selected portion of the sample to be evaluated, and the crack width obtained using the obtained SEM image is defined as the large crack width.

### <<Water Loss Characteristics>>

A lead-acid battery (rated capacity: 2 Ah, 2V unit cell) is prepared using a polycarbonate battery case, one lead oxide positive electrode, and two lead negative electrodes, and injecting dilute sulfuric acid having a specific gravity of 1.28 as an electrolyte. Using this lead-acid battery, an overcharge test is performed to evaluate water loss. For this test, a charge/discharge test device ACD-01 G-Version manufactured by Aska Electronic Co., Ltd., is used. As specific test conditions, the following operations are performed at 25 °C in the order of (1) and (2).
(1) Charge 1: Voltage value 2.4 V, constant voltage charge for 18 hours
(2) Charge 2: Voltage value 2.5 V, constant voltage charge for 96 hours

After the above operation (2) is completed, the final current value at 96 hours is determined from the data of the charge/discharge device. The determined current value is converted from the current value (mA) to WL (g/Ah, water loss characteristics, water reduction amount) per battery capacity using the empirically obtained correction formula "35 mA = 5.0 g/Ah." This correction formula converts the Water Loss overcharge test described above to a 42-days overcharge test equivalent. The obtained current value is described in Table 1 as a Water Loss current value. The unit thereof is mA.

### <<Membrane Thickness>>

A KEYENCE Digital Microscope VHX-6000 is used in the observation and measurement of membrane thickness. The cross-section of the separator is observed with a digital microscope (magnification 200-fold), the cross-sectional thickness of the cracked layer of the separator is measured at three arbitrary points, and the arithmetic mean value of the three points is described in Table 1. The unit thereof is µm.

### <<Median Particle Size (d50)>>

A Microtrac Bell MT3300EXII (optical bench) and SDC (data circulator) are used in the measurement of the median particle size. Microtrac II is used as the measurement software. The measurement conditions are as follows.

### [Measurement Conditions]

SetZero time: 10
Measurement time: 10
Number of measurements: 1

It is necessary that the analysis conditions be changed in accordance with the primary components of the cracked layer. As an example, analysis conditions for a sample of paint (aqueous solvent) used in the formation of a cracked layer having carbon as a primary component are shown below.

### [Analysis conditions]

Permeability: Absorption
Particle refractive index: 1.40
Shape: non-spherical
Solvent refractive index: 1.333

For samples other than paint, the cracked layer is removed from the separator laminate, dissolved in an organic solvent (hexane, acetone, etc.) which can dissolve resin, and dispersed with ultrasonic waves.

### <<Substrate Flat Surface Observation>>

Surface SEM (scanning electron microscope) observation of the substrate is performed, and under the conditions of 40-fold magnification, with an effective range of 4 mm × 3 mm, the area A of the rib projections when the substrate is viewed from above and the area B of the base portion of the substrate are measured, and A / (A + B) is calculated. As used herein, the term "effective range" means a range which can be observed when using a microscope.

### <<Example 1>> (comparative example)

A polyethylene separator (RipTide C manufactured by Daramic; back web thickness: 300 µm, serrated ribs, rib height: 400 µm, maximum pore diameter: 120 nm, A/ (A + B): 0.08) was used as the substrate. In the formation of the crack-containing layer, slurry preparation was first performed. Carbon black having a median particle size of approximately 1 µm as solid, an ionic surfactant, acrylic copolymer latex, and a thickener were dispersed and mixed in an aqueous solvent consisting of water and an aprotic polar solvent to prepare a slurry. At this time, the ionic surfactant was Polyty^{®} P-2000 manufactured by Lion Specialty Chemicals Co., Ltd., in an amount of 30 parts by weight per 100 parts by weight of carbon black in the slurry. The acrylic copolymer latex was Polytron^{®} A65S manufactured by Asahi Kasei Corporation in an amount of 20 parts by weight per 100 parts by weight of carbon black in the slurry. The thickener was 2 parts by weight of carboxymethyl cellulose (CMC) per 100 parts by weight of carbon black in the slurry. The total solid content in the slurry was 3 wt% based on the total weight of the slurry. Furthermore, the aprotic polar solvent was 10 wt% of N-methyl-2-pyrrolidone (NMP) based on the total weight of the aqueous solvent. Using an applicator, the slurry was manually applied (hand-coated) onto the side of the substrate having a back web and dried in an oven at 80 °C for 5 minutes to obtain a separator comprising a crack-containing layer. At this time, the applicator gap (clearance formed between the separator and the applicator) was 45 µm. The obtained separator was cut into a rectangle, folded in half along the long side so that the crack-containing layer was on the outside, and both ends of the separator were sealed in the direction perpendicular to the folded side, leaving one side open to produce a bag-shaped separator. A positive electrode was inserted into the bag-shaped separator. The results of evaluation of the substrate, the obtained cracked layer, and the lead-acid battery according to the evaluation methods described above are described in Table 1.

### <<Example 2>>

Production was performed in the same manner as Example 1 except that regarding the slurry, the blending ratio of CMC and NMP of Example 1 was changed to 0 parts by weight and 0 wt%, respectively.

### <<Example 3>>

Production was performed in the same manner as Example 1 except that regarding the slurry, the blending ratio of NMP of Example 1 was changed to 0 wt%.

### <<Example 4>>

Production was performed in the same manner as Example 1 except that regarding the slurry, the carbon black of Example 1 was changed to alumina (Al₂O₃) having a median particle size of approximately 1 µm, and the blending ratio of NMP was changed to 0 wt%.

### <<Example 5>> (comparative example)

Production was performed in the same manner as Example 1 except that regarding the slurry, the total solid content of Example 1 was changed to 5 wt%, the NMP blending ratio was changed to 0 wt%, and regarding the manual application, the drying conditions of Example 1 were changed to drying for 3 minutes in an oven at 110 °C.

### <<Example 6>>

Production was performed in the same manner as in Example 1 except that regarding the slurry, the blending ratio of CMC of Example 1 was changed to 0 wt%.

### <<Example 7>> (comparative example)

Production was performed in the same manner as Example 1 except that regarding the slurry, the carbon black of Example 1 was changed to carbon black (Denka Black HS-100 manufactured by Denka Co., Ltd.) having a median particle size of approximately 50 nm, and the blending ratio of CMC and NMP was changed to 0 parts by weight and 0 wt%, respectively.

### <<Comparative Example 1>>

Production was performed in the same manner as Example 1 except that regarding the slurry, the blending ratio of CMC of Example 1 was changed to 10 parts by weight and the blending ratio of NMP was changed to 10 wt%.

The results of the Examples and Comparative Examples are shown in Table 1 below. Please note that, similarly to comparative example 1, examples 1, 5, and 7 are also merely comparative examples useful to understand the claimed invention.

**Table 1**

| | | Ex 1 | Ex 2 | Ex 3 | Ex 4 | Ex 5 | Ex 6 | Ex 7 | Comp Ex 1 |
|---|---|---|---|---|---|---|---|---|---|
| Coating film | Material | Carbon | Carbon | Carbon | Al₂O₃ | Carbon | Carbon | Carbon | Carbon |
| | Film thickness (µm) | 11 | 11 | 10 | 20 | 50 | 9 | 35 | 60 |
| | Microcracks | Present | Present | Present | Present | Absent | Present | Present | Absent |
| | Large crack ratio | 0.1% | 9.1% | 4.6% | 3.0% | 8.0% | 1.2% | 0% | 0% |
| | Ratio of cracks continuing to interface with substrate | 75.0% | 92.9% | 62.5% | 85.7% | 100.0% | 60.0% | 0% | 0% |
| | Large crack width (max) (µm) | 4 | 15 | 10 | 11 | 35 | 7 | - | - |
| Battery performance | WL (water loss characteristics) (g/Ah) | 5.3 | 2.9 | 4.1 | 1.4 | 5.7 | 2.3 | 6.0 | 8.6 |

Remark: Similarly to Comp Ex1, the examples 1, 5, and 7 are also comparative examples useful to understand the claimed invention.

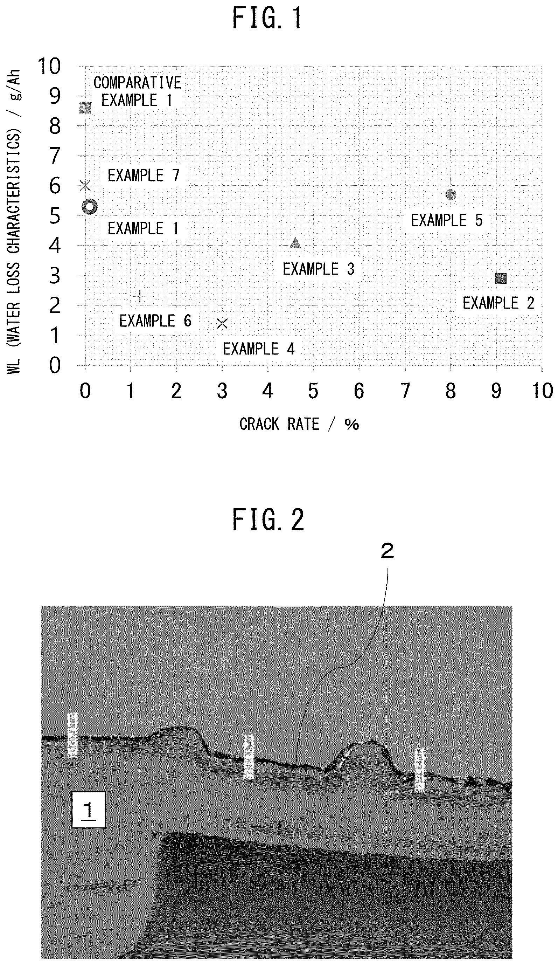

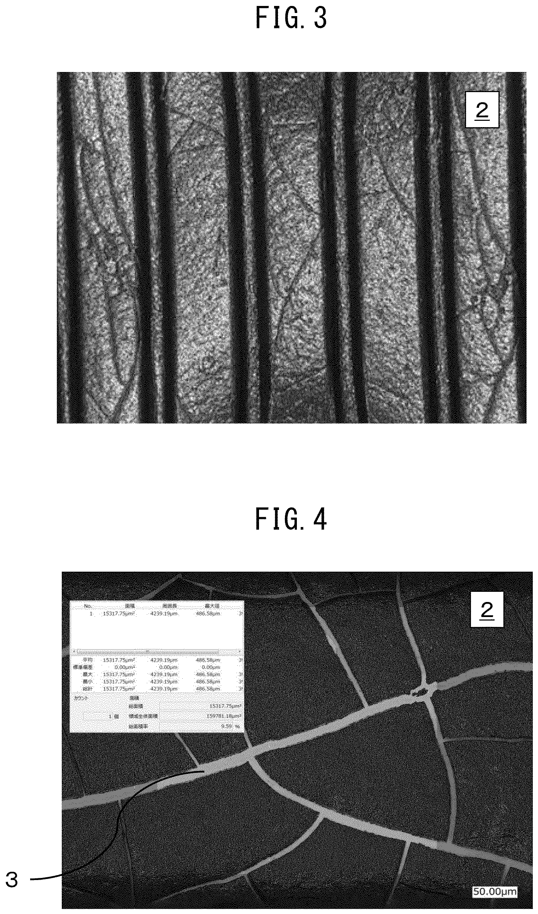

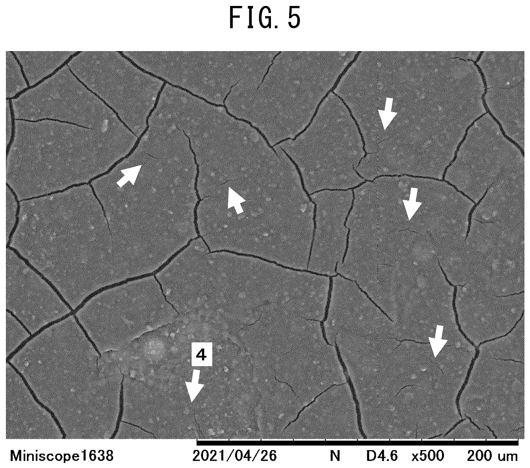

FIG. 2 is an example of a digital microscope image of a cross-section of a separator for a lead-acid battery according to the present disclosure which is different from the Examples and Comparative Examples described above. FIG. 3 is a digital microscope image of the surface of the separator for a lead-acid battery. FIG. 4 is a 500-fold digital microscope observation image of the surface of the crack-containing layer of the separator for a lead-acid battery of FIG. 3. As shown in FIGS. 1 and 2, it can be understood that the separator for a lead-acid battery has a layer (2) having cracks on the surface of the substrate (1), and large cracks (3) on the surface of the layer, as shown in FIG. 3. FIG. 5 is a 500-fold SEM observation image of the surface of the crack-containing layer of the separator for a lead-acid battery of FIG. 3. As shown in FIG. 5, the separator for a lead-acid battery has layer (2) having large cracks and microcracks on the surface of substrate (1).

### INDUSTRIAL APPLICABILITY

The separator for a lead-acid battery of the present disclosure is useful for lead-acid batteries, such as flooded batteries (FB), and in particular, is suitable as a separator for enhanced flooded batteries (EFB).

### DESCRIPTION OF REFERENCE SIGNS

- 1: substrate
- 2: large crack-containing layer
- 3: large cracks
- 4: microcracks

## Claims

1. A separator for a lead-acid battery, comprising:
a substrate, and
a crack-containing layer which is laminated on at least one surface of the substrate and which contains an electrically conductive material,
**characterized in that**
the crack-containing layer contains large cracks formed in the thickness direction from the layer surface, the large cracks having a width of 0.3 µm to 100 µm and a length of 200 µm to 10 mm,
wherein 50% or more of the of the large cracks reach the boundary between the layer and the substrate, and
wherein the crack-containing layer has a large crack ratio of 1.0% or more, wherein the large crack ratio is the surface ratio of the area of large cracks to the total area of the crack-containing layer, and
wherein the crack-containing layer contains small cracks which have a width of 0.01 µm to less than 0.3 µm and a length of 1 µm to 200 µm.

2. The separator for a lead-acid battery according to claim 1, wherein the small cracks are observable with a scanning electron microscope, but not observable with an optical microscope, when the crack-containing layer surface is observed at a 500-fold magnification.

3. The separator for a lead-acid battery according to claim 1 or 2, wherein the electrically conductive material is a carbon material.

4. The separator for a lead-acid battery according to any one of claims 1 to 3, wherein the crack-containing layer contains an ionic surfactant.

5. The separator for a lead-acid battery according to any one of claims 1 to 4, wherein the crack-containing layer contains an acrylic copolymer resin.

6. The separator for a lead-acid battery according to any one of claims 1 to 5, wherein the crack-containing layer contains a thickener.

7. The separator for a lead-acid battery according to any one of claims 1 to 3, wherein the crack-containing layer contains at least two selected from the group consisting of an ionic surfactant, an acrylic copolymer resin, and a thickener.

8. The separator for a lead-acid battery according to any one of claims 1 to 7, wherein the crack-containing layer has a thickness of 0.1 µm to 30 µm.

9. The separator for a lead-acid battery according to any one of claims 1 to 8, wherein the substrate has ribs, and the ribs are at least one selected from the group of serrated ribs, slanted ribs, broken ribs, straight ribs, embossments, protrusions, and combinations thereof.

10. A lead-acid battery, comprising a positive electrode, a negative electrode, and the separator according to any one of claims 1 to 9 between the positive electrode and the negative electrode.

11. The lead-acid battery according to claim 10, wherein the crack-containing layer faces the negative electrode and is in contact with the negative electrode.

## Patentansprüche

1. Separator für eine Blei-Säure-Batterie, umfassend:
ein Substrat, und
eine risshaltige Schicht, die auf mindestens eine Oberfläche des Substrats laminiert ist und ein elektrisch leitfähiges Material enthält,
**dadurch gekennzeichnet, dass**
die risshaltige Schicht große Risse enthält, die in der Dickenrichtung von der Schichtoberfläche aus ausgebildet sind, wobei die großen Risse eine Breite von 0,3 µm bis 100 µm und eine Länge von 200 µm bis 10 mm aufweisen,
wobei 50 % oder mehr der großen Risse die Grenze zwischen der Schicht und dem Substrat erreichen, und
wobei die risshaltige Schicht einen Anteil großer Risse von 1,0 % oder mehr aufweist, wobei der Anteil großer Risse der Oberflächenanteil der Fläche großer Risse zur Gesamtfläche der risshaltigen Schicht ist, und
wobei die risshaltige Schicht kleine Risse enthält, die eine Breite von 0,01 µm bis weniger als 0,3 µm und eine Länge von 1 µm bis 200 µm aufweisen.

2. Separator für eine Blei-Säure-Batterie nach Anspruch 1, wobei die kleinen Risse mit einem Rasterelektronenmikroskop beobachtbar sind, mit einem Lichtmikroskop aber nicht beobachtbar sind, wenn die risshaltige Schichtoberfläche bei 500-facher Vergrößerung betrachtet wird.

3. Separator für eine Blei-Säure-Batterie nach Anspruch 1 oder 2, wobei das elektrisch leitfähige Material ein Kohlenstoffmaterial ist.

4. Separator für eine Blei-Säure-Batterie nach einem der Ansprüche 1 bis 3, wobei die risshaltige Schicht ein ionisches oberflächenaktives Mittel enthält.

5. Separator für eine Blei-Säure-Batterie nach einem der Ansprüche 1 bis 4, wobei die risshaltige Schicht ein Acrylcopolymerharz enthält.

6. Separator für eine Blei-Säure-Batterie nach einem der Ansprüche 1 bis 5, wobei die risshaltige Schicht ein Verdickungsmittel enthält.

7. Separator für eine Blei-Säure-Batterie nach einem der Ansprüche 1 bis 3, wobei die risshaltige Schicht mindestens zwei enthält, ausgewählt aus der Gruppe bestehend aus einem ionischen oberflächenaktiven Mittel, einem Acrylcopolymerharz und einem Verdickungsmittel.

8. Separator für eine Blei-Säure-Batterie nach einem der Ansprüche 1 bis 7, wobei die risshaltige Schicht eine Dicke von 0,1 µm bis 30 µm aufweist.

9. Separator für eine Blei-Säure-Batterie nach einem der Ansprüche 1 bis 8, wobei das Substrat Rippen aufweist und die Rippen mindestens eines sind, ausgewählt aus der Gruppe bestehend aus geriffelten Rippen, abgeschrägten Rippen, der unterbrochenen Rippen, geraden Rippen, Einprägungen, Vorsprüngen und Kombinationen davon.

10. Blei-Säure-Batterie, umfassend eine positive Elektrode, eine negative Elektrode und den Separator nach einem der Ansprüche 1 bis 9 zwischen der positiven Elektrode und der negativen Elektrode.

11. Blei-Säure-Batterie nach Anspruch 10, wobei die risshaltige Schicht der negativen Elektrode zugewandt ist und mit der negativen Elektrode in Kontakt ist.

## Revendications

1. Séparateur pour une batterie au plomb-acide, comprenant :
un substrat, et
une couche contenant des fissures qui est stratifiée sur au moins une surface du substrat et qui contient un matériau électriquement conducteur,
**caractérisé en ce que**
la couche contenant des fissures contient de grandes fissures formées dans la direction d'épaisseur à partir de la surface de couche, les grandes fissures présentant une largeur de 0,3 µm à 100 µm et une longueur de 200 µm à 10 mm,
dans lequel 50 % ou plus des grandes fissures atteignent la limite entre la couche et le substrat, et
dans lequel la couche contenant des fissures présente un rapport de grandes fissures supérieur ou égal à 1,0 %, dans lequel le rapport de grandes fissures est le rapport de surfaces de la zone de grandes fissures sur la zone totale de la couche contenant des fissures,
et
dans lequel la couche contenant des fissures contient de petites fissures qui présentent une largeur de 0,01 µm à moins de 0,3 µm et une longueur de 1 µm à 200 µm.

2. Séparateur pour batterie au plomb-acide selon la revendication 1, dans lequel les petites fissures peuvent être observées avec un microscope électronique à balayage, mais ne peuvent pas être observées avec un microscope optique lorsque la surface de couche contenant des fissures est observée avec un grossissement à 500 fois.

3. Séparateur pour batterie au plomb-acide selon la revendication 1 ou 2, dans lequel le matériau électriquement conducteur est un matériau carboné.

4. Séparateur pour batterie au plomb-acide selon l'une quelconque des revendications 1 à 3, dans lequel la couche contenant des fissures contient un tensioactif ionique.

5. Séparateur pour batterie au plomb-acide selon l'une quelconque des revendications 1 à 4, dans lequel la couche contenant des fissures contient une résine copolymère acrylique.

6. Séparateur pour batterie au plomb-acide selon l'une quelconque des revendications 1 à 5, dans lequel la couche contenant des fissures contient un épaississant.

7. Séparateur pour batterie au plomb-acide selon l'une quelconque des revendications 1 à 3, dans lequel la couche contenant des fissures contient au moins deux éléments choisis dans le groupe constitué d'un tensioactif ionique, d'une résine copolymère acrylique et d'un épaississant.

8. Séparateur pour batterie au plomb-acide selon l'une quelconque des revendications 1 à 7, dans lequel la couche contenant des fissures présente une épaisseur de 0,1 µm à 30 µm.

9. Séparateur pour batterie au plomb-acide selon l'une quelconque des revendications 1 à 8, dans lequel le substrat présente des nervures, et les nervures sont au moins choisies dans le groupe de nervures dentelées, de nervures inclinées, de nervures cassées, de nervures droites, de reliefs, de saillies et de combinaisons de celles-ci.

10. Batterie au plomb-acide, comprenant une électrode positive, une électrode négative et le séparateur selon l'une quelconque des revendications 1 à 9 entre l'électrode positive et l'électrode négative.

11. Batterie au plomb-acide selon la revendication 10, dans lequel la couche contenant des fissures fait face à l'électrode négative et est en contact avec l'électrode négative.
